(19) Europäisches Patentamt
European Patent Office
Office européen des brevets

(11) **EP 1 088 032 B1**

(12) **EUROPÄISCHE PATENTSCHRIFT**

(45) Veröffentlichungstag und Bekanntmachung des Hinweises auf die Patenterteilung:
**21.01.2004 Patentblatt 2004/04**

(21) Anmeldenummer: **99916922.0**

(22) Anmeldetag: **15.04.1999**

(51) Int Cl.[7]: **C08L 27/02**, C08K 13/02
// (C08K13/02, 3:22),
C08K5:3492

(86) Internationale Anmeldenummer:
**PCT/EP1999/002548**

(87) Internationale Veröffentlichungsnummer:
**WO 1999/055777 (04.11.1999 Gazette 1999/44)**

(54) **STABILISATORKOMBINATION FÜR HALOGENHALTIGE THERMOPLASTISCHE HARZZUSAMMENSETZUNG**

STABILIZER COMBINATION FOR HALOGEN-CONTAINING THERMOPLASTIC RESIN COMPOSITIONS

ASSOCIATION DE STABILISANTS POUR COMPOSITION DE RESINE THERMOPLASTIQUE HALOGENEE

(84) Benannte Vertragsstaaten:
**AT BE DE ES FR GB IT NL**

(30) Priorität: **24.04.1998 DE 19818441**

(43) Veröffentlichungstag der Anmeldung:
**04.04.2001 Patentblatt 2001/14**

(73) Patentinhaber: **Baerlocher GmbH**
**85716 Unterschleissheim (DE)**

(72) Erfinder:
- **REITH, Walter**
**D-82281 Egenhofen (DE)**
- **ROSENTHAL, Michael**
**D-80801 München (DE)**

(74) Vertreter: **Fiesser, Gerold Michael**
**KNH Patentanwälte**
**Kahlhöfer, Neumann, Herzog, Fiesser**
**Postfach 26 02 32**
**80059 München (DE)**

(56) Entgegenhaltungen:
**EP-A- 0 838 495** **DE-A- 4 134 325**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 088 032 B1

## Beschreibung

Die vorliegende Erfindung betrifft eine Stabilisatorkombination für bewitterungsstabile halogenhaltige thermoplastische Harzzusammensetzungen, insbesondere auf Polyvinylchlorid - (PVC) - Basis.

Halogenhaltige Polymere unterliegen chemischen Abbaureaktionen durch Einwirkung von elektromagnetischer Strahlung und/oder Wärme, die zu nachhaltigen Beeinträchtigungen der Gebrauchseigenschaften führen können oder bereits zu Problemen während der Verarbeitung führen. Insbesondere neigen PVC-Formteile unter dem Einfluß von Wärme, Wasser und elektromagnetischer Strahlung zu Abbaureaktionen, die zu einer Verschlechterung vor allem der Farbe führen. Zur Verhinderung dieser unerwünschten Abbaureaktionen der Polymerketten werden in die thermoplastischen Polymermassen schon seit langem sogenannte Stabilisatoren eingearbeitet.

Für die Herstellung von Formteilen aus PVC-U, wie Fensterprofilen, technischen Profilen, Rohren und Platten, werden wegen der hohen Anforderungen, die an diese Formteile gestellt werden, und aufgrund ihrer guten stabilisierenden Eigenschaften üblicherweise schwermetallhaltige Stabilisatoren eingesetzt. Da Schwermetalle wie Blei und Cadmium aus gewerbehygienischen und umweltpolitischen Gründen zur Stabilisierung von PVC in der Diskussion sind, versucht man, diese Stabilisatoren in zunehmendem Maße durch physiologisch unbedenkliche Stabilisierungssysteme auf Basis von Calcium- oder Zinkverbindungen zu ersetzen. Diese Stabilisatoren verleihen den damit stabilisierten Fromteilen jedoch meist eine deutlich geringere Thermostabilität und neigen bei längerer Freibewitterung vielfach zu einer auffälligen Gelbverfärbung.

Die bekannten Ca/Zn - Stabilisierungssysteme sind deshalb vor allem für weiße Formteile aus PVC-U für den Außeneinsatz, wie PVC-Fensterprofile, bezüglich Thermostabilität und Bewitterungsstabilität nur unzureichend.

Durch den partiellen Ersatz von Titandioxid durch Zinksulfid wird nach der Lehre von EP - B - 424572 die Bewitterungsstabilität von blei - und cadmiumstabilisierten PVC-U Formkörpem verbessert. Durch Verwendung einer derartigen Kombination wird jedoch der Schwermetallgehalt der PVC-U Formmasse erhöht, was im Hinblick auf die neuen Stabilisierungssysteme nicht erwünscht ist.

Aus DE - C - 3019632 ist zudem die Verwendung von Hydrotalciten der Formel $Mg_{1-x}Al_x(OH)_2A_{x/n}{}^{n-} \cdot mH_2O$ zur Inhibierung des Abbaus von thermoplastischen Harzen bekannt. Es hat sich aber gezeigt, daß die hier aufgeführten Verbindungen im Hinblick auf die thermische Stabilität nicht die gewünschte Qualität erreichen.

Auch andere Stabilisatorkombinationen vom Hydrotalcittyp, wie sie z.B. in EP - B - 189899 als $[(M_1{}^{2+})_{y1} (M_2{}^{2+})_{y2}]_{1-x}M_x{}^{3+}(OH)_2A_{x/n}{}^{n-} \cdot m\,H_2O$ beschrieben sind, können die hohen Anforderungen an Thermostabilität nicht oder nur unzureichend befriedigen.

Calciumhydroxid als Stabilisator für PVC wird beschrieben in DE -A- 2935689, wobei hier das Einsatzgebiet PVC-P ist, und zwingend mindestens ein phenolisches Antioxidans nötig ist. Aus EP -B- 0 394 547 ist die Kombination von overbased Erdalkalicarboxylaten mit Zeolith, Calciumhydroxid und Perchloraten bekannt. Die dort beschriebene Kombination ist jedoch nur für den Einsatz in PVC-P für den Innenbereich geeignet. Dies gilt ebenso für DE 4031 401 A1. In DD -A- 298 799 wird vorgeschlagen eine Kombination verschiedener, feindisperser Calciumverbindungen, die mit Calciumstearat gecoatet werden als PVC-Stabilisatoren einzusetzen.

Der Erfindung liegt die Aufgabe zugrunde, eine Stabilisatorkombination für halogenhaltige thermoplastische Harze zur Verfügung zu stellen, die im Vergleich zu den bekannten Formulierungen eine hohe Thermostabilität aufweist und vorzugsweise für den Einsatz in PVC-U für den Außenbereich geeignet ist.

Diese Aufgabe wird erfindungsgemäß gelöst durch eine Stabilisatorkombination für halogenhaltige thermoplastische Harze, umfassend

(a) Calciumhydroxid und/oder Calciumoxid, die gegebenenfalls oberflächenmodifiziert sein können; und

(b) ein hydroxylgruppenhaltiges Isocyanurat.

Die Komponente (a) ist erfindungsgemäß vorzugsweise in einer Menge von 0,1 bis 5 Gewichtsteilen, insbesondere in einer Menge von 0,2 bis 2 Gewichtsteilen, bezogen auf des halogenhaltige Harz, enthalten.

Die Komponente (b) ist erfindungsgemäß vorzugsweise in einer Menge von 0,1 bis 3 Gewichtsteilen, insbesondere in einer Menge von 0,2 bis 1 Gewichtsteilen, bezogen auf des halogenhaltige Harz, enthalten.

Das hydroxylgruppenhaltige Isocyanurat wird vorzugsweise gewählt aus Verbindungen der allgemeinen Formel (I)

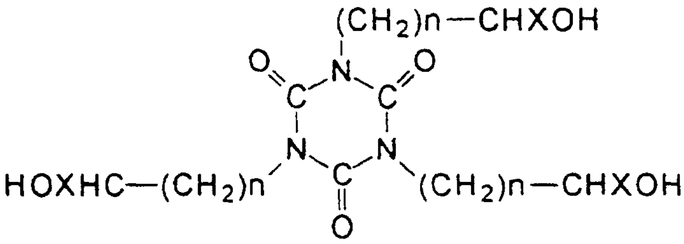

(I)

worin die Gruppen X und die Indices n jeweils gleich oder verschieden sind und n eine ganze Zahl von 0 bis 5 und X ein Wasserstoffatom oder eine geradkettige oder verzweigte Alkylgruppe mit 1 bis 6 Kohlenstoffatomen bedeutet.

Insbesondere bevorzugt ist Tris(hydroxyethyl)isocyanurat (im folgenden als THEIC bezeichnet).

Die erfindungsgemäße Stabilisatorkombination wird bevorzugt für Polyvinylchlorid (PVC) als halogenhaltiges thermoplastisches Harz verwendet. Insbesondere bevorzugt wird sie für PVC-U (Hart-PVC) eingesetzt.

Der hierin verwendete Begriff Polyvinylchlorid umfaßt gebräuchliche Homo- und Copolymerisate von Vinylchlorid sowie Abmischungen solcher Polyvinylchloridverbindungen mit anderen Polymermassen. Derartige Polymerisate können auf beliebigen Wegen, beispielsweise durch Suspensions-, Emulsions- oder Blockpolymerisation hergestellt worden sein. Ihr K-Wert kann beispielsweise zwischen 50 und 100 liegen.

Es hat sich gezeigt, daß durch Verwendung einer erfindungsgemäßen Stabilsatorkombination insbesondere Formkörper aus PVC-U für Außenanwendungen hergestellt werden können, die eine unerwartet hoheThermostabilität aufweisen.

Die erfindungsgemäße Stabilsiatorkombination kann zusätzlich mindestens einen weiteren Bestandteil enthalten. Dieser kann beispielsweise aus den folgenden Substanzen gewählt werden:

- BasischeCalcium-Aluminium-Hydroxiphosphite der allgemeinen Formel (11)

$$Ca_xAl_2(OH)_{2(x+3-y)}(HPO_3)_y \cdot m\,H_2O \qquad (II)$$

worin

$$2 \leq x \leq 12,$$

$$\frac{2x+5}{2} > y > 0$$

und

$$0 \leq m \leq 12$$

bedeutet,
Verbindungen der allgemeinen Formel (II) werden z. B. in DE- A- 4106411 beschrieben. Weitere basische Calcium-Aluminium-Hydroxyphosphite werden in DE- A- 3941902 beschrieben.

- Basischen Calcium-Aluminium-Hydroxicarboxylaten der allgemeinen Formel (III)

$$Ca_xAl_2(OH)_{[(2x+6)-y]}A_{y/n}^{\,n-} \cdot m\,H_2O \qquad (III)$$

worin

$$2 \leq x \leq 12,$$

$$\frac{2x+5}{2}>y>0,$$

$$0 \leq m \leq 12,$$

und

$$1 \leq n \leq 8$$

bedeutet, und

$A^{n-}$ ein aliphatisches gesättigtes, ungesättigtes, geradkettiges oder verzweigtes ein- oder mehrfunktionelles Carbonsäureanion mit 1 bis 22 Kohlenstoffatomen oder ein aromatisches oder heteroaromatisches ein- oder mehrfunktionells Carbonsäureanion mit 6 bis 20 Kohlenstoffatomen bedeutet.

Das Carbonsäureanion $A^{n-}$ der allgemeinen Formel (III) kann beispielsweise ausgewählt werden aus Anionen der Malon-, Bernstein-, Adipin-, Fumar-, Malein-, Phthal-, Isophthal-, Terephthal-, Pyridin-, Benzoe-, Salicyl-, Tartron-, Äpfel-, Wein-, Acetondicarbon-, Oxalessig-, Aconit-, und Zitronensäure. Bevorzugt sind die Anionen der Fumar- und Phthalsäure, insbesondere werden Fumarate eingesetzt.

Verbindungen der allgemeinen Formel (III) sind z.B. aus DE- A- 4106404 bekannt. Weitere Calcium-Aluminium-Hydroxicarboxylate werden in DE- A- 4002988 beschrieben.

- Polyole und/oder Disaccharidalkohole, bespielsweise Trimethylolpropan, Ditrimethylolpropan, Pentaerythrit, Dipentaerythrit, Tripentaerythrit, Polyvinylalkohol, Maltit, Isomaltit, Sorbit, Mannit, Lactit, Glycerin, Diglycerin.

- Epoxidverbindungen

- Lineare oder cyclische β-Ketoester und/oder β-Diketone und/oder Triketone und/oder deren Metallsalze.

- Hydrotalkite wie beispielsweise beschrieben in DE 44 25 266, EP 01 89 899, DE 38 43 581, US 4,883,533, EP 04 07 139, DE 40 31 818, DE 41 10 835, DE 41 17 034, EP 05 22 810, DE 44 39 934 und US 5,352,723.

- Zeolithe, die beispielsweise durch die allgemeine Formel $M_x^n[(AlO_2)_x(SiO_2)_y] \cdot m\ H_2O$ beschrieben werden können, worin n die Ladung des Kations M (z.B. Alkali - oder Erdalkalimetall), $0{,}8 \leq x$; $y \leq 15$ und $0 \leq m \leq 300$ ist.

- Aminoverbindungen, beispielsweise ausgewählt aus sterisch gehinderten Aminen (HALS), Aminocrotonsäureverbindungen, Uracilen, Aminosäuren und deren Alkali - und Erdalkalisalzen.

- Hydrocalumite der allgemeinen Formel $AlCa_x(OH)2x+3 \cdot m\ H_2O$; x = 1 bis 4; m = 0 bis 8, die beispielsweise in DE-A- 4103881 beschrieben werden.

- Erdalkali- und/oder Zinksalze gesättiger, ungesättigter, geradkettiger oder verzweigter ein- oder mehrfunktioneller aromatischer oder aliphatischer Carbonsäuren.

- Zinnhaltige Stabilisatoren, ausgewählt aus den Mercaptiden, Sulfiden und Carboxylaten. Es können sowohl normale Ester als auch reversed Ester eingesetzt werden.

- Perchloratverbindungen, die beispielsweise als Salze von 1, 2 oder 3-wertigen Metallen, die gegebenfalls z. B. durch Kreide oder Silikate inertisiert und/oder als Einlagerungsverbindungen in anorganische Schichtverbindungen, eingesetzt werden können.

- Gleitmittel, beispielsweise ausgewählt aus den Gruppen der Paraffinwachse, der Polyethylenwachse, der Polypropylenwachse, der Estergleitmittel, der monound/oder polyvalenten Alkohole, der Mono- und/oder Polycarbonsäuren und/oder Amidwachse.

Gleitmittel können beispielsweise als Gleitmittelpaket, entsprechend den rheologischen Erfordernissen, eingesetzt werden.

Die erfindungsgemäße Stabilisatorkombination kann in beliebiger physikalischer Form, z. B. als Pulvermischung, Press-, Sprüh- oder Microgranulat, Schuppe oder Pastille vorliegen. Diese Produktformen können entweder aus Pulvermischungen durch Druck und/oder Temperatur und/oder durch Zugabe von Granulierhilfsmitteln in Granulatform gebracht werden oder durch Abkühlen bzw. Absprühen von Schmelzen der erfindungsgemäßen Zusammensetzung zu Schuppen, Pastillen oder Prills geformt werden. Zur Herstellung von halogenhaltigen Harzmassen können die Einzelsubstanzen direkt oder als Mischung in den o.g. Produktformen vor oder während der Verarbeitung zugegeben werden. Die halogenhaltige thermoplastische Harzmasse kann dann in an sich bekannter Weise zu Formkörpern geformt werden.

Die erfindungsgemäße Stabilisatorkombination kann in Kombination mit üblicherweise eingesetzten Zuschlagstoffen, wie Füllstoffen (z.B. Kreide), Pigmenten (z.B. Titandioxid, Zinksulfid), Flammschutzmitteln (z.B. Magnesiumhydroxid, Aluminiumhydroxid, Antimontrioxid), Verstärkungsmitteln (z.B. Glasfasern, Talkum, Pflanzenfasem) und Weichmachern (z. B. Phthalat-, Phosphat- und/oder Polymerweichmacher, Chlorparaffine) bei der Herstellung von thermoplastischen Formmassen verwendet werden.

Die nachfolgenden Beispiele, die in den Rezepturtabellen A und B beschrieben sind, erläutern die Erfindung. In den Beispielen wurde die Thermostabilität bewertet, indem der DHC-Wert nach DIN 53381, Teil 1 Verfahren B, bestimmt wurde.

Verarbeitung:

Die Rezepturbestandteile wurden zusammen mit dem PVC und anderen Zuschlagstoffen in einem HeizlKühl-Mischer bis zu einer Aufbereitungstemperatur von 120°C gemischt und anschließend auf 40°C abgekühlt. Das so hergestellte Dryblend wurde dann mittels eines Extruders zu Profilen extrudiert.

**Beispiel A (Zusammensetzung)**

| | A1 | A2 | A3 | A4 | A5 | A6 |
|---|---|---|---|---|---|---|
| S-PVC | 100 | 100 | 100 | 100 | 100 | 100 |
| Kreide 1) | 5 | 5 | 5 | 5 | 5 | 5 |
| Schlagzähmacher 2) | 7 | 7 | 7 | 7 | 7 | 7 |
| $TiO_2$ 3) | 4 | 4 | 4 | 4 | 4 | 4 |
| Fließhilfe 4) | 1 | 1 | 1 | 1 | 1 | 1 |
| Distearylphthalat | 0,6 | 0,6 | 0,6 | 0,6 | 0,6 | 0,6 |
| Paraffinwachs | 0, 2 | 0,2 | 0,2 | 0,2 | 0,2 | 0,2 |
| Benzoylstearoylmethan | 0,2 | 0,2 | 0,2 | 0,2 | 0,2 | 0,2 |
| Cacliumacetylacetonat | 0,3 | 0,3 | 0,3 | 0,3 | 0,3 | 0,3 |
| Zinkstearat | 0,8 | 0,8 | 0,8 | 0.8 | 0,8 | 0,8 |
| Hydrotalkit 5) | 1 | 0,5 | | 0,5 | | 0,33 |
| $Ca_4Al_2(OH)_{12}HPO_3 * 3 H_2O$ | | 0,5 | 1 | | 0,5 | 0,33 |
| Calciumhydroxid | | | | 0,5 | 0,5 | 0,33 |
| THEIC 6) | 0,3 | 0,3 | 0,3 | 0,3 | 0,3 | 0,3 |

1) Hydrocarb 95 T (Handelsname Fa. Omya)
2) Bärodur E-ST 3 (Handelsname Fa. Bärlocher)
3) Kronos 2220 (Handelsname von Fa. Kronos)
4) Bärorapid 10 F (Handelsname Fa. Bärlocher)
5) Alcamizer 4 (Handelsname von Fa. Kyowa)
6) Tris(hydroxyethyl)isocyanurat

Tabelle 1 zeigt die DHC Werte.

Tabelle 1

| Probe | DHC Wert [min] |
|---|---|
| A1 | 26 |
| A2 | 25 |
| A3 | 25 |
| A4 | 66 |
| A5 | 66 |
| A6 | 61 |

Es ist offensichtlich, daß die erfindungsgemäßen Mischungen A4 bis A6 deutlich höhere DHC-Werte ergeben und somit eine höhere Thermostabilität ausweisen als die Vergleichsmischungen A1 bis A3.

**Beispiel B (Zusammensetzung)**

| | B1 | B2 | B3 | B4 | B5 | B6 | B7 | B8 | 89 |
|---|---|---|---|---|---|---|---|---|---|
| S-PVC | 100 | 100 | 100 | 100 | 100 | 100 | 100 | 100 | 100 |
| Kreide 1) | 4 | 4 | 4 | 4 | 4 | 4 | 4 | 4 | 4 |
| Schlagzähmacher 2) | 7 | 7 | 7 | 7 | 7 | 7 | 7 | 7 | 7 |
| $TiO_2$ 3) | 4 | 4 | 4 | 4 | 4 | 4 | 4 | 4 | 4 |
| Fließhilfe 4) | 1 | 1 | 1 | 1 | 1 | 1 | 1 | 1 | 1 |
| Stearylstearat | 0,8 | 0,8 | 0,8 | 0,8 | 0,8 | 0,8 | 0,8 | 0,8 | 0,8 |
| Paraffin wachs | 0,2 | 0,2 | 0,2 | 0,2 | 0.2 | 0,2 | 0,2 | 0,2 | 0,2 |
| Benzoylstearoylmethan | 0,2 | 0,2 | 0,2 | 0,2 | 0,2 | 0,2 | 0,2 | 0,2 | 0,2 |
| Cacliumacetylacetonat | 0,3 | 0,3 | 0,3 | 0,3 | 0,3 | 0,3 | 0,3 | 0,3 | 0,3 |
| Zinkstearat | 0,8 | 0,8 | 0,8 | 0,8 | 0,8 | 0,8 | 0,8 | 0,8 | 0.8 |
| Calciumstearat | 0,4 | 0,4 | 0,4 | 0,4 | 0,4 | 0,4 | 0,4 | 0,4 | 0.4 |
| $Ca_4Al_2(OH)_{12}HPO_3\ 3H_2O$ | 0,8 | 1,2 | 2 | | | | 0,4 | 0,6 | 1 |
| Calciumhydroxid | | | | 0,8 | 1,2 | 2 | 0,4 | 0,6 | 1 |
| THEIC 51 | 0,4 | 0,4 | 0,4 | 0,4 | 0,4 | 0,4 | 0,4 | 0,4 | 0,4 |

Tabelle 2 zeigt die DHC Werte.

Tabelle 2

| Probe | DHC Wert (min) |
|---|---|
| B1 | 20 |
| B2 | 27 |
| B3 | 50 |
| B4 | 74 |
| B5 | 98 |
| 86 | 138 |
| B7 | 55 |

Tabelle 2 (fortgesetzt)

| Probe | DHC Wert (min) |
|---|---|
| B8 | 70 |
| 89 | 94 |

Es ist offensichtlich, daß die erfindungsgemäßen Mischungen B4 bis B9 höhere Werte ergeben und somit eine höhere Thermostabilität aufweisen als die Vergleichsmischungen B1 bis B3.

**Patentansprüche**

1. Stabilisatorkombination für halogenhaltige thermoplastische Harze, umfassend

   a) 0,1 bis 5 Gewichtsteile Calciumhydroxid und/oder Calciumoxid, die gegebenenfalls oberflächenmodifiziert sein können, bezogen auf das halogenhaltige Harz, und

   b) ein hydroxylgruppenhaltiges Isocyanurat.

2. Stabilisatorkombination nach Anspruch 1, worin die Komponente (b) in einer Menge von 0,1 bis 3 Gewichtsteilen, bezogen auf das halogenhaltige Harz, enthalten ist.

3. Stabilisatorkombination nach Anspruch 1 oder 2, worin das hydroxylgruppenhaltige Isocyanurat gewählt wird aus Verbindungen der allgemeinen Formel (I)

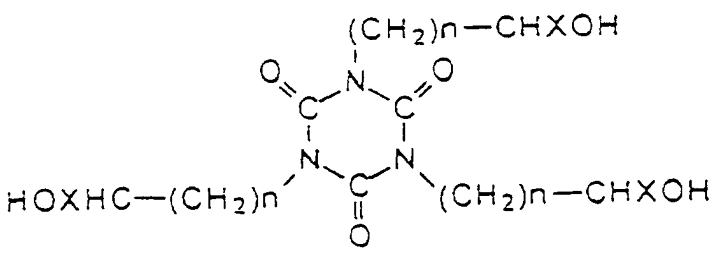

(I)

worin die Gruppen X und die Indices n gleich oder verschieden sind und n eine ganze Zahl von 0 bis 5 und X ein Wasserstoffatom oder eine geradkettige oder verzweigte Alkylgruppe mit 1 bis 6 Kohlenstoffatomen bedeutet

4. Stabilisatorkombination nach einem der Ansprüche 1 bis 3 für Polyvinylchlorid-Harze.

**Claims**

1. Stabilizer combination for halogen-containing thermoplastic resins, comprising

   a) 0.1 to 5 parts by weight of calcium hydroxide and/or calcium oxide, which can be surface modified if necessary, with respect to the halogen-containing resin, and

   b) a hydroxyl group-containing isocyanurate.

2. Stabilizer combination according to claim 1, wherein the component (b) is included in a quantity from 0.1 to 3 parts by weight, with respect to the halogen-containing resin.

3. Stabilizer combination according to claim 1 or 2, wherein the hydroxyl group-containing isocyanurate is selected from compounds of the general formula (I)

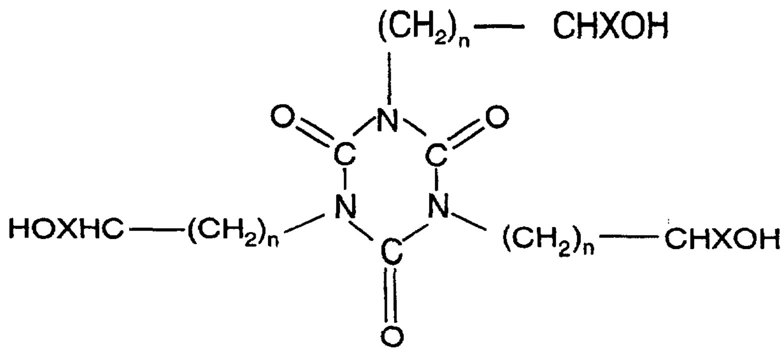

wherein the groups X and the indices n can be the same or different and n represents a whole number from 0 to 5 and X a hydrogen atom or a straight chain or branched alkyl group with 1 to 6 carbon atoms.

**4.** Stabilizer combination according to one of claims 1 to 3 for polyvinylchloride resins.

**Revendications**

**1.** Association de stabilisants pour des résines thermoplastiques halogénées, comportant

a) 0,1 à 5 parties en poids d'hydroxyde de calcium et/ou d'oxyde de calcium qui le cas échéant peuvent être modifiés à la surface, par rapport à la résine halogénée, et

b) un isocyanurate comprenant des groupes hydroxyles.

**2.** Association de stabilisants selon la revendication 1, dans laquelle la composante (b) est comprise dans une quantité de 0,1 à 3 parties en poids, par rapport à la résine halogénée.

**3.** Association de stabilisants selon la revendication 1 ou 2, dans laquelle l'isocyanurate est choisi de composés ayant la formule générale (I)

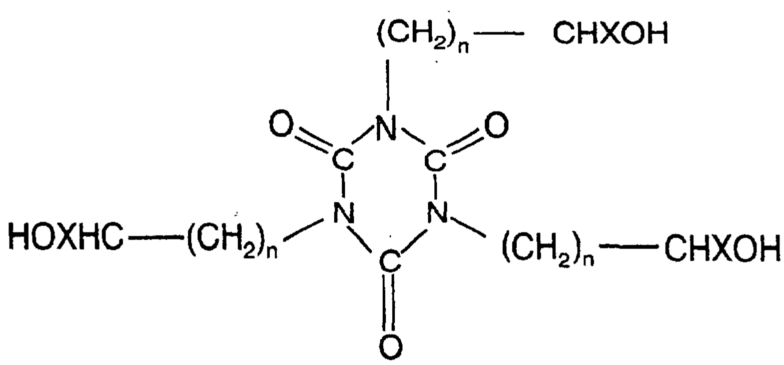

dans laquelle les groupes X et les indexes n sont égaux ou différents et n signifie un nombre entier de 0 à 5 et X un atome d'hydrogène ou un groupe d'alkyle à chaînes linéaires ou un groupe d'alkyle ramifié avec 1 à 6 atomes de carbone.

**4.** Association de stabilisants selon l'une des revendications 1 à 3 pour des résines de polyvinylchlorure.